# FASCICULE DE BREVET EUROPEEN

(11) **EP 0 647 918 B1**
(45) Date de publication et mention de la délivrance du brevet: **02.06.1999**
(21) Numéro de dépôt: 94402200.3
(22) Date de dépôt: 03.10.1994
(51) Int. Cl.: G06K 19/077

(54) **Carte portable multi-applications pour ordinateur personnel**
Tragbare Mehrzweckkarte für Personalrechner
Portable multipurpose card for personal computer

(30) Priorité: 06.10.1993 FR 9311925
(43) Date de publication de la demande: 12.04.1995
(73) Titulaire: GEMPLUS CARD INTERNATIONAL, F-13420 Gémenos (FR)
(72) Inventeur: Le Roux, Jean-Yves, F-75116 Paris (FR)

(56) Documents cités:
- EP-A- 0 549 983
- WO-A-89/12288

## Description

L'invention est relative aux cartes portables multi-applications destinées à être insérées temporairement dans un lecteur de cartes faisant partie, notamment, d'un micro-ordinateur ou ordinateur personnel, ou PC (de l'anglais "personal computer").

Elle concerne les cartes comme indiquées dans le préambule de la revendication 1 et comme par example connues du document EP-A-0 549 983.

Elle concerne plus particulièrement les cartes au format PCMCIA comportant 68 broches, et qui ont été normalisées par la Personal Computer Memory Card International Association, 1030B East Duane Avenue, Sunnyvale, California.

Ces cartes pourraient remplacer dans un proche avenir les disquettes ou autres moyens de stockage de masse de type magnétique, ainsi que les cartes électroniques portables de type cartes à puce.

En effet, leur forte capacité de mémoire de masse (de l'ordre de quelques millions d'octets), leur encombrement réduit (de l'ordre de 5 x 8 cm pour 3 mm d'épaisseur), et leur vitesse d'accès sensiblement plus rapide que les disquettes magnétiques, en font un support idéal de l'information.

Toutefois, et pour des raisons de constitution du support informatique employé, les cartes PCMCIA ne sont pas sûres. L'information qu'elles contiennent est largement plus accessible que l'information que contiendrait notamment une carte à puce.

Afin de pallier cet inconvénient, on a tout d'abord proposé d'introduire une carte à puce classique dans une carte PCMCIA, en réalisant une connection entre la puce de la carte à puce et le système informatique de la carte PCMCIA. Une telle solution est par exemple décrite dans la demande de brevet français publiée sous le numéro 2 686 172.

Cette solution attrayante est cependant limitée. En effet, les cartes à puce actuelles ne visent qu'une unique application car, bien qu'une puce puisse théoriquement contenir une quantité suffisante d'information pour plusieurs applications, le développement des cartes à puce multi-applications nécessite des accords entre les différents prestataires qui sont pratiquement impossibles à obtenir dans le contexte économique actuel.

On a alors imaginé de disposer de multiples cartes à puce avec la carte PCMCIA du type de celle de la demande de brevet précitée. Néanmoins, cette solution n'est pas viable puisqu'une carte à puce standard ayant une épaisseur de 0,8 mm, l'utilisation de par exemple, 9 cartes à puce avec une telle carte PCMCIA conduirait à un ensemble dont l'épaisseur minimale serait d'environ 9 x 0,8 mm + 3 mm = 10,2 mm. Ceci est considérable pour une carte dite portable qui devrait tenir dans une poche de veste.

Par ailleurs, dans un brevet US-5,049,728, on a proposé l'utilisation de carte à puces multiples. Cette solution n'est cependant pas envisageable car le corps de ces cartes est très complexe à réaliser, et la manipulation des puces y est malaisée.

La présente invention a pour objet de remédier à ces inconvénients de connexion et de complexité de manipulation, en proposant une carte PCMCIA avec un tiroir apte à recevoir un tel jeton.

Selon l'invention, ce but est atteint comme indiqué dans la revendication 1.

Selon une autre caractéristique de l'invention, de telles cartes portables comportent avantageusement un couvercle muni de réceptacles destinés à recevoir les jetons.

La description qui va suivre, et qui ne présente aucun caractère limitatif, permettra de mieux comprendre comment la présente invention peut être mise en pratique.

Elle doit être lue en regard des dessins annexés dans lesquels :
- les figures 1A, 1B, 1C représentent respectivement l'ouverture du tiroir de la carte portable, le placement du jeton dans celui-ci, et sa fermeture ;
- la figure 2 illustre la superposition à une carte portable selon l'invention, d'un couvercle à réceptacles, et d'un ensemble de jetons ; et
- la figure 3 illustre la superposition à une carte portable selon l'invention, d'un couvercle à glissières, et d'un ensemble de jetons.

L'invention s'applique plus particulièrement au cartes portables au format PCMCIA référencées 1 dans l'ensemble des figures.

Les cartes au format PCMCIA forment un boîtier 2 parallélépipédique et rectangulaire dont les dimensions sont sensiblement égales à 5 x 8 cm pour une épaisseur de l'ordre de 3 mm. Ce boîtier 2 peut comporter, un micro-processeur, et une mémoire de masse.

Un premier connecteur 3 femelle de 68 broches normalisé est disposé à la périphérie du boîtier 2 sur l'un de ses petits côtés, en vue d'être enfiché dans un connecteur mâle correspondant d'un ordinateur personnel.

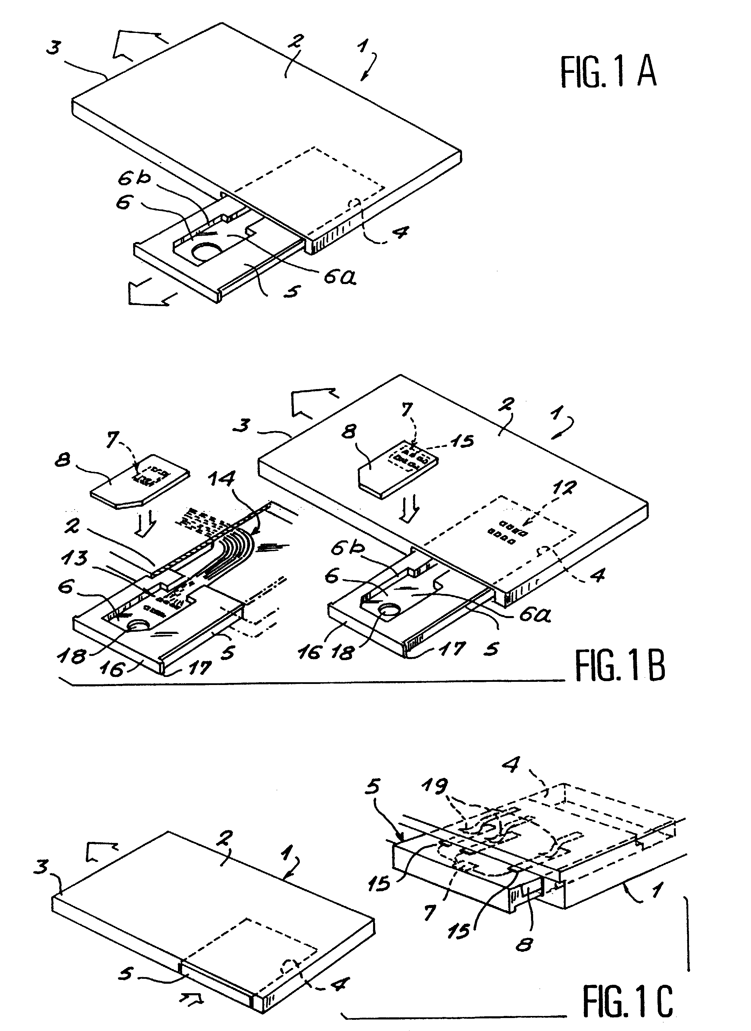

Une cavité 4 représentée en traits tirés sur les figures 1A, 1B, et 1C, est ménagée dans la carte PCMCIA et débouche sur son chant, au niveau de l'un des côtés non utilisés par le connecteur 3. De préférence, ce côté est un grand côté de la carte PCMCIA.

Cette cavité 4 est destiné à recevoir un tiroir 5 représenté en position ouverte sur les figures 1A et 1B, et en position fermée sur la figure 1C.

Le tiroir 5 est plein sauf à l'endroit d'une découpe-cavité ou empreinte référencée 6 dans son ensemble. Cette découpe 6 comporte un fond 6a et des bords sensiblement verticaux 6b, présentant avantageusement une légère dépouille. Le fond du tiroir 5 est en fait le fond 6a de la découpe 6. Des puces 7 à contacts affleurants ou métallisations 15 peuvent être déposées dans la découpe-cavité 6. Ces contacts sont du type de ceux que l'on trouve typiquement sur les cartes à puce principalement utilisées pour la sécurité d'accès à des locaux, pour des transactions bancaires, ou pour des prestations de services telles que les communications téléphoniques. Dans le cas de l'invention, les puces 7 sont elles-mêmes disposées chacune sur un jeton 8 avec un format plus petit que le format carte à puce.

La découpe 6 prend alors avantageusement la forme des jetons 8. Ceux-ci s'inscrivent par exemple dans un parallélépipède d'environ 15 mm de largeur, 25 mm de longueur, et de 0,8 mm d'épaisseur. L'un des coins est découpé pour permettre une orientation correcte du jeton 8 ou de la puce 7 par rapport au tiroir 5.

Bien entendu, le cadre de l'invention ne se limite pas seulement aux cartes portables comportant une unique cavité 4 munie d'un tiroir 5, mais il comprend en outre les cartes portables qui comportent plusieurs cavités munies chacune d'un tiroir 5. Le nombre de broches de la carte PCMCIA est susceptible d'autoriser une telle variante, compte tenu de ce que les puces ont généralement 8 contacts au plus. Dans ce cas, un éventuel microprocesseur contenu dans la carte PCMCIA peut même effectuer un multiplexage entre les puces connectées dans les tiroirs.

Par ailleurs, les cartes portables de l'invention comportent un second connecteur destiné à réaliser une connection entre d'une part, les huit plots de contacts affleurants 15 que comporte classiquement une puce et, d'autre part, les éléments actifs de la carte PCMCIA, vers le premier connecteur à 68 broches. Ce second connecteur a donc huit fils conducteurs reliés soit directement au connecteur de 68 broches, soit à une interface de dialogue gérée par le microprocesseur de la carte et réalisant notamment une conversion de protocole entre des signaux émis ou reçus par la puce et des signaux reconnus par l'ordinateur personnel.

Le second connecteur est disposé, au choix, dans la cavité 4, ainsi que le représente la partie droite de la figure 1B, ou au fond du tiroir 5, dans la découpe 6, ainsi que le représente la partie gauche de cette même figure.

S'il est disposé dans la cavité 4, il est situé contre un plafond de cette cavité. Le jeton 8 est alors orienté, dans le tiroir 5, avec des métallisations 15 de la puce 7 dirigés vers le haut. La représentation du second connecteur sur la figure 1B est alors référencée 12. Le connecteur 12 peut dans ce cas être fixe. Le contact avec la puce 7 se forme dès la fermeture du tiroir 5, par un ajustage très précis, et avec des plots de contact du second connecteur comportant des parties souples telles que par exemple, des contacts formant des lames métalliques et élastiques référencés 19 dans la figure 1C, en partie droite, qui montre une coupe longitudinale du tiroir 5 engagé dans la carte 1. Le second connecteur peut aussi être mobile. Dans ce cas, la fermeture du tiroir 5 engendre un déplacement des plots de contact du second connecteur vers la puce. Le premier cas est celui d'une réalisation simple mais la puce 7 peut être rayée par les contacts répétés avec les lames du connecteur 12. Le second cas ne comporte pas cet inconvénient, mais il est d'une réalisation mécaniquement plus difficile. Néanmoins, la seconde réalisation est possible. Dans son principe, c'est celle qui est mise en oeuvre dans les connecteurs connus de cartes à puce du type dit à atterrissage.

Par contre, si le second connecteur est disposé au niveau du tiroir 5, il est fixe sur le fond de la découpe 6. Sa représentation sur la figure 1B est alors référencée 13. Dans ce mode de réalisation, le jeton 8 doit être déposé avec le connecteur de la puce 7 orienté vers le bas. Le second connecteur est alors relié à des fils conducteurs souples 14 dont la longueur est suffisante pour permettre une ouverture et une fermeture du tiroir 5, sans contrainte. Dans ce cas, la cavité 4 possède dans le fond un espace libre pour recevoir les brins des fils de connection lorsque le tiroir est en position fermée. En pratique, ces fils exercent un effort tendant naturellement à ouvrir le tiroir. Cette solution est particulièrement intéressante car la puce 7 ne sera alors pas rayée par le connecteur 13, et la réalisation de ce connecteur est simple, relativement à ce que serait la réalisation d'un connecteur mobile.

Lors de la mise en place de la carte PCMCIA dans le lecteur du micro-ordinateur, les parois latérales de la fente d'introduction de ce lecteur exercent avantageusement un effort de maintien sur un butoir 16 monté en bout de ce tiroir, afin de le maintenir fermé. De préférence, le butoir 16 comporte un chanfrein 17 à l'avant, dans le sens de l'introduction, pour favoriser l'engagement du tiroir 5. Il est également possible de prévoir entre le tiroir 5 et la cavité 4, un léger frottement ou un taquet élastique pour maintenir le tiroir fermé. Dans ce cas, par en dessous le tiroir, il y a un onglet pour le retirer. En outre, le tiroir est de préférence percé, en son fond, d'un trou débouchant 18 permettant l'enlèvement du jeton 8.

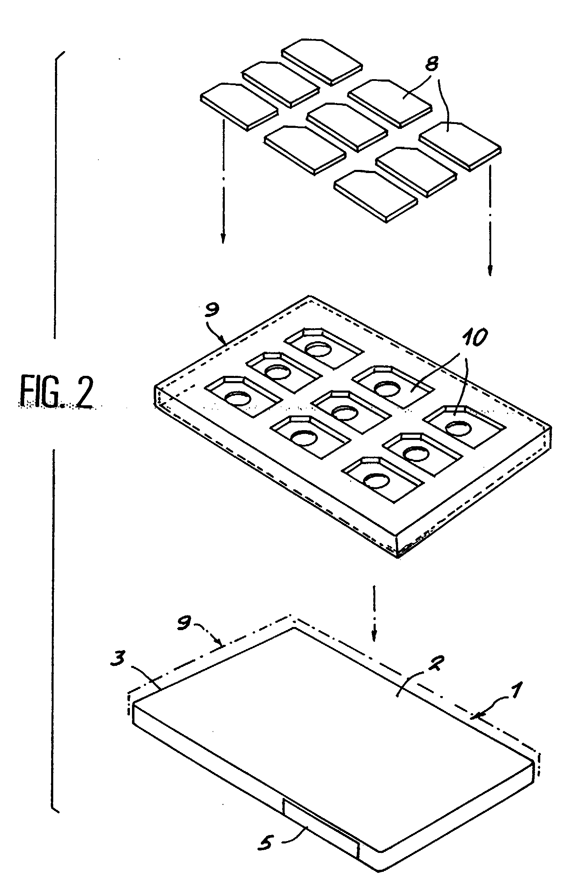

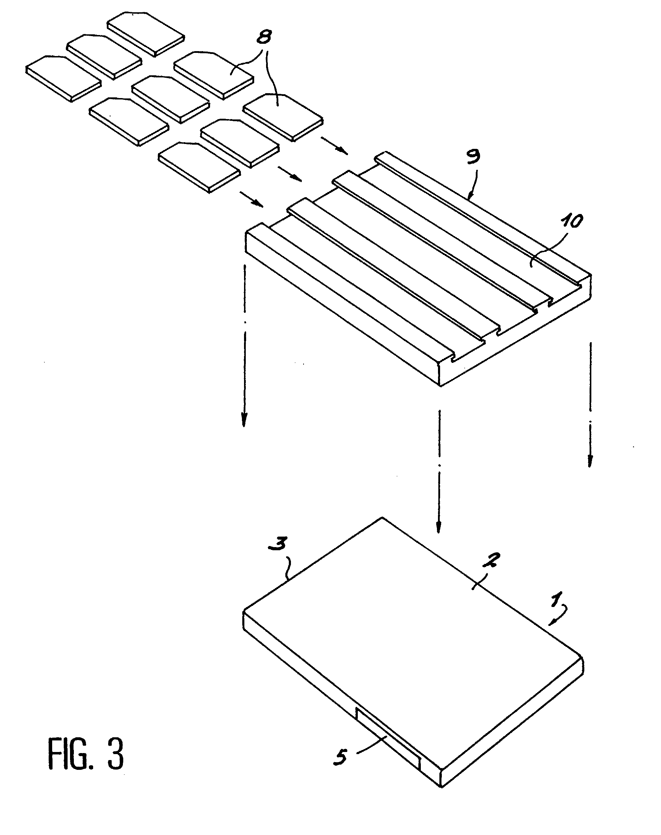

Ainsi que l'illustre les figures 2 et 3, la carte 1 peut recevoir un couvercle 9 muni de réceptacles 10 destinés à recevoir des puces supportées chacune par un jeton 8.

Ce couvercle 9 est apte à venir recouvrir l'une des deux faces principales de la carte PCMCIA. Il possède avantageusement une longueur légèrement plus modeste que celle de celle-ci, de manière à laisser le premier connecteur 3 découvert. Le couvercle 9 s'encliquette avantageusement sur la carte PCMCIA grâce à tous les moyens dont dispose communément l'homme du métier : petits crochets, rebords, ..., et que l'on ne décrira pas ici. Selon un autre mode de réalisation, le couvercle 9 peut comporter une glissière dans laquelle on introduira la carte PCMCIA. Par ailleurs, ce couvercle 9 peut être fixé à un fond constituant une boîte destinée à recevoir la carte PCMCIA.

Les réceptacles représentés en figure 2 sont des cavités par exemple caoutchoutées ou munies de rebords souples, adaptées à la mise en place des puces 7 supportées par leurs jetons 8, par encliquetage manuel. Le couvercle 9 selon l'invention comporte 9 jetons au plus. En outre, le fond de chaque réceptacle 10 possède avantageusement un orifice 11, par exemple circulaire, pour permettre de saisir un jeton.

Par contre, les réceptacles 10 représentés sur la figure 3 sont formés par des glissières. Le couvercle 9 comporte par exemple trois glissières destinées à recevoir chacune trois jetons 8.

Dans les deux cas précités, l'épaisseur de la carte portable revêtue de son couvercle ne sera que légèrement supérieure à 3 + 0,8 = 3,8 mm. En pratique, elle est inférieure à 6 mm. Une telle épaisseur, bien inférieure aux 10,2 mm estimés précédemment, reste dans des proportions acceptables pour un utilisateur.

En ce qui concerne l'aspect fonctionnel de l'invention, on considérera un utilisateur muni d'une carte portable selon l'invention désirant mettre en oeuvre l'application déterminée d'une puce portée par un jeton 8 du couvercle 9. Cet utilisateur devra retirer le couvercle 9 de la carte PCMCIA, sélectionner le jeton adéquat sur le couvercle 9, récupérer ce jeton, ouvrir le tiroir 5, introduire le jeton 8 dans ce tiroir, et refermer le tiroir avant d'engager la carte dans le lecteur.

Les jetons 8 comportent de préférence des inscriptions ou logos particuliers, ce qui permet de sélectionner immédiatement le jeton correspondant à l'application désirée.

Après avoir retiré le couvercle, la récupération d'un jeton 8 s'effectue soit en le faisant glisser dans son réceptacle (cas de la figure 3), soit en appliquant une légère pression du doigt au travers de l'orifice 11 afin de le décliqueter (cas de la figure 2).

Une fois que la puce sélectionnée a été récupérée, il suffira d'ouvrir le tiroir 5, par exemple en utilisant les ongles, d'introduire le jeton 8 dans la découpe-cavité 6 puis de refermer ledit tiroir 5. L'ouverture et la fermeture du tiroir 5 s'effectuent sensiblement transversalement au plan formé par le chant de la carte comportant ledit tiroir 5. Le tiroir 5 reste toujours, même ouvert, solidaire du boîtier 2. Le coin biseauté de la découpe 6 permet d'orienter correctement le jeton 8. Ce coin sert de détrompeur.

Selon que le second connecteur est disposé en fond de tiroir ou dans la cavité, la connection entre les huit plots de la puce 7 formant les métallisations 15, et les élément actifs de la carte PCMCIA vers le premier connecteur 3, s'effectuera respectivement sur le tiroir 5 ou dans la cavité 4.

Un problème se pose néanmoins : celui de limiter l'usure des métallisations 15 du jeton 8. En effet, dans le cas de la solution proposée où les métallisations 15 sont orientés vers le haut lors de la pose du jeton 8 (partie droite de la figure 1B), le fait d'insérer et d'enlever de nombreuses fois le jeton 8 dans la carte conduit à rayer les métallisations 15 lors de la fermeture du tiroir 5 par passage de ces métallisations 15 sous les contacts souples et excroissants 19 situés sous le plafond de la cavité 4. En pratique, on s'est aperçu que ces rayures sont d'autant plus profondes, et néfastes à la conservation du jeton 8, que les contacts souples et excroissants 19 doivent avoir un grand débattement pour rattraper les jeux nécessaires de part et d'autre du jeton 8 lors de son insertion. On s'est rendu compte alors que la réalisation d'un tiroir 5 avec un fond 6 permettrait de limiter ces jeux à un jeu supérieur seulement. De ce fait, on a pu limiter le dépassement des contacts et obtenir une carte qui agresse nettement moins les métallisations du jeton 8. Bien entendu, le fond du tiroir 5 empêche a priori l'enlèvement du jeton 8, sauf si on a un trou d'extraction 18. Ce trou d'extraction 18 peut avoir des dimensions telles que le fond du tiroir 5 soit limité à un rebord de soutènement, le long des bords verticaux.

La carte pourra ensuite être enfichée dans le lecteur et la puce 7 sera en communication directe avec l'ordinateur personnel.

Afin d'améliorer la sécurité, la carte PCMCIA peut avantageusement comporter un système de reconnaissance du porteur tel qu'un système de reconnaissance ou par code d'identification.

Pour la mise en oeuvre de l'invention, la carte portable pourrait comporter des jetons dont les fonctions sont différentes et par exemple, un jeton téléphonique, un jeton santé, un jeton télévision, un jeton jeux vidéo, un jeton d'identification. La mémoire de masse peut être utilisée pour les différentes applications, en combinaison avec les jetons associés.

Le jeton téléphonique permettrait de téléphoner selon un nombre donné d'unités. Par ailleurs, des mémoires associées au microprocesseur de la carte PCMCIA contiennent alors avantageusement un annuaire personnalisé.

Le jeton santé permettrait d'effectuer par exemple des paiements à objet médical, alors que la carte PCMCIA contiendrait le dossier médical de son porteur, des numéros d'urgence.

Le jeton télévision serait utilisé notamment dans les cas de télévision à péage. La mémoire de la carte PCMCIA contiendrait parallèlement les programmes télévision de la semaine, les préférences de l'utilisateur ou les abonnements en attente de validation.

Le jeton jeux vidéo permettrait l'achat de jeux via un réseau informatique, lesdits jeux seraient alors immédiatement intégrés dans la mémoire de masse de la carte PCMCIA, éventuellement sous forme compactée.

Le jeton d'identification permettrait l'accès à des informations distribuées sur réseau, ou l'accès physique à des locaux. Dans ce dernier cas, la carte PCMCIA contiendrait parallèlement une antenne d'émission pour des accès sans contact.

Bien entendu, de nombreuses applications sont possibles. Chaque application peut utiliser la mémoire de masse de la carte PCMCIA pour stocker des données sécurisées ou non, au bon vouloir de l'utilisateur. Si de plus, la mémoire alors sécurisée du microprocesseur comporte les codes d'accès aux services des différentes puces, les défaillances trop fréquentes de la mémoire des utilisateurs normaux n'engendrera aucune conséquence.

## Revendications

1. Carte portable multi-applications enfichable notamment dans un lecteur d'un ordinateur personnel, comportant un premier connecteur (3) destiné à une connexion avec ledit lecteur et disposé à la périphérie d'un boîtier (2), de plus comportant d'une part, un tiroir mobile (5), disposé sur un chant de la carte (1), s'engageant dans une cavité (4) du boîtier (2), comportant une découpe-cavité (6) destiné à recevoir une puce (7) supportée par un jeton (8) et, d'autre part, un second connecteur (12, 13) en relation électronique avec le premier connecteur (3), caractérisé en ce que la découpe-cavité (6) est munie d'un fond (6a) et en ce que le second connecteur (12,13) est fixé sur le fond du tiroir (5), ledit connecteur étant relié au premier connecteur (3) par l'intermédiaire de fils conducteurs (14) souples.

2. Carte portable selon la revendication 1, caractérisée en ce que les dimensions du jeton (8) s'inscrivent dans un parallélépipède d'environ : 15 mm de largeur, 25 mm de longueur, et de 0,8 mm d'épaisseur.

3. Carte portable selon l'une des revendications précédentes, caractérisée en ce qu'elle est basée sur le format PCMCIA.

4. Carte portable selon l'une des revendications 1 à 3, caractérisée en ce que le tiroir (5) comporte un trou pour désengager le jeton (8) de la découpe-cavité (6).

5. Carte portable selon l'une des revendications précédentes, caractérisée en ce qu'elle comporte en outre un couvercle (9) muni de réceptacles (10) pour les jetons (8).

6. Carte portable selon la revendication 5, caractérisée en ce que les réceptacles (10) sont des glissières adaptées à la mise en place des jetons (8).

7. Carte portable selon la revendication 5, caractérisée en ce que les réceptacles (10) sont des cavités munies de rebords souples adaptées à la mise en place des jetons (8) par encliquetage manuel et munis de trous pour permettre l'enlèvement des jetons (8).

8. Carte portable selon l'une des revendications 5 à 7, caractérisée en ce que le couvercle (9) comporte des réceptacles (10) pour neuf jetons (8).

9. Carte portable selon l'une des revendications précédentes, caractérisée en ce qu'un micro-processeur comporte un mécanisme de reconnaissance du porteur.

10. Carte portable selon l'une des revendications précédentes, caractérisée en ce que la mémoire sécurisée du microprocesseur comporte les codes d'accès aux services des différentes puces (7) des jetons (8).

11. Carte portable selon l'une des revendications précédentes, caractérisée en ce que la mémoire de masse peut être utilisée pour les différentes applications en combinaison avec les jetons (8) associés.

## Patentansprüche

1. Tragbare Mehrfachanwendungs-Einsteckkarte, insbesondere für ein Lesegerät eines Personalcomputers mit einem ersten Verbinder (3) für eine Verbindung mit dem Lesegerät, der am Umfang eines Gehäuses (2) angeordnet ist, derart, daß es zudem einen beweglichen Auszug (5) enthält, der an einer Kante der Karte (1) angeordnet ist, in Eingriff mit einem Hohlraum (4) des Gehäuses (2) steht, mit einem Ausschnitthohlraum (6), der zum Aufnehmen eines durch eine Münze (8) gehaltenen Substrats (7) bestimmt ist, sowie andererseits einem zweiten Verbinder (12, 13) in elektrischer Verbindung mit dem ersten Verbinder (3), dadurch gekennzeichnet, daß der Ausschnitthohlraum (6) mit einem Boden (6a) versehen ist und daß der zweite Verbinder (12, 13) an dem Boden des Auszugs (5) fixiert ist, derart, daß der Verbinder an dem ersten Verbinder (3) durch zwischenliegende biegsame Verbindungadrähte (14) angeschlossen ist.

2. Tragbare Karte nach Anspruch 1, dadurch gekennzeichnet, daß die Abmessungen der Nünze (8) einem Parallelepiped entsprechen, mit ungefähr einer Breite von 15 mn, einer Länge von 25 mm und einer Höhe von 0,6 mm.

3. Tragbare Karte nach einem der vorhergehenden Ansprüche, dadurch gekennzeichnet, daß sie auf dem PCMCIA-Format basiert.

4. Tragbare Karte nach einem der Ansprüche 1 bis 3, dadurch gekennzeichnet, daß der Auszug (5) eine Öffnung für das Herausnehmen der Münze (8) aus dem Ausschnitthohlraum (6) enthält.

5. Tragbare Karte nach einem der vorhergehenden Ansprüche, dadurch gekennzeichnet, daß sie zudem eine mit Auffängen (10) für die Münzen (8) versehene Abdeckung (9) enthält.

6. Tragbare Karte nach Anspruch 5, dadurch gekennzeichnet, daß die Auffänge (10) Gleitechienen sind, die zum Positionieren der Münzen (8) ausgebildet sind.

7. Tragbare Karte nach Anspruch 5, dadurch gekennzeichnet, daß die Auffänge (10) mit biegsamen Randleisten versehene hohlräume sind, die für das positionieren der Münzen (8) durch manuelles Verklingen ausgebildet sind und mit Öffnungen versehen sind, die ein Anheben der Münzen (8) gestatten.

8. Tragbare Karte nach einem der Ansprüche 5 bis 7, dadurch gekennzeichnet, daß die Abdeckung (9) Auffänge (10) für neun Münzen (8) aufweist.

9. Tragbare Karte nach einem der vorangehenden Ansprüche, dadurch gekennzeichnet, daß ein Mikroprozessor einen Mechanismus zum Erkennen des Trägers aufweist.

10. Tragbare Karte nach einem der vorangehenden Ansprüche, dadurch gekennzeichnet, daß der gesicherte Speicher des Mikroprozessors den Dienstzugriffscode der unterschiedlichen Substrate (7) der Münze (8) enthält.

11. Tragbare Karte nach einem der vorangehenden Ansprüche, dadurch gekennzeichnet, daß der Massenepeicher für die unterschiedlichen Anwendungen in Kombination mit den zugeordneten Münzen (8) angewendet werden kann.

## Claims

1. A portable multi-application card, in particular one which can be plugged into a reader of a personal computer, having a first connector (3) designed to provide a connection with said reader and disposed at the periphery of a casing (2), also having a movable drawer (5) arranged on one edge of the card (1), locating in a cavity (4) of the casing (2), having a cut-out cavity (6) designed to receive a chip (7) supported by a token (8) on the one hand and, on the other, a second connector (12, 13) electronically linked to the first connector (3), characterised in that the cut-out cavity (6) is provided with a base (6a) and characterised in that the second connector (12, 13) is fixed on the base of the drawer (5), said connector being linked to the first connector by means of flexible conductor wires (14).

2. A portable card as claimed in claim 1, characterised in that the dimensions of the token (8) are described within a parallelepiped of approximately : 15 mm in width, 25 mm in length and 0,8 mm in thickness.

3. A portable card as claimed in one of the preceding claims, characterised in that it is based on the PCMCIA format.

4. A portable card as claimed in one of claims 1 to 3, characterised in that the drawer (5) has a hole for releasing the token (8) from the cut-out cavity (6).

5. A portable card as claimed in one of the preceding claims, characterised in that it also has a cover (9) provided with compartements (10) for the tokens (8).

6. A portable card as claimed in claim 5, characterised in that the compartments (10) are slides specially designed for positioning of the tokens (8).

7. A portable card as claimed in claim 5, characterised in that the compartments (10) are cavities having flexible ledges designed for locating the tokens by a manual click-fit and provided with holes enabling the tokens (8) to be removed.

8. A portable card as claimed in one of claims 5 to 7, characterised in that the cover (9) has compartments for nine tokens (8).

9. A portable card as claimed in one of the preceding claims, characterised in that a micro-processor has a mechanism for recognising the holder.

10. A portable card as claimed in one of the preceding claims, characterised in that the security-protected memory of the microprocessor contains access codes to the services of the different chips (7) of the tokens (8).

11. A portable card as claimed in one of the preceding claims, characterised in that the mass memory can be used for the different applications in conjunction with the associated tokens (8).
